# EUROPEAN PATENT SPECIFICATION

(11) **EP 2 228 240 B1**
(45) Date of publication and mention of the grant of the patent: **27.01.2016**
(21) Application number: 10002407.4
(22) Date of filing: 09.03.2010
(51) Int. Cl.: B60G 3/14, B60G 7/00, B60G 7/04, B60G 11/16, B60G 11/18, B60G 11/20, B60G 15/06, B60G 17/005, B60G 17/015, B60G 17/017, B60G 99/00

(54) **Vehicle suspension**
Fahrzeugaufhängung
Suspension de véhicule

(30) Priority: 09.03.2009 GB 0904015
(43) Date of publication of application: 15.09.2010
(73) Proprietor: Nissan Motor Manufacturing (UK) Ltd., Cranfield Bedfordshire MK43 0DB (GB)
(72) Inventor: Ross, Alistair, Cranfield Bedfordshire MK43 0DB (GB); Paterson, Craig, Cranfield Bedfordshire MK43 0DB (GB)

(56) References cited:
- CA-A1- 2 267 140
- FR-A1- 2 694 240
- JP-A- 61 155 009
- US-A- 3 931 987

## Description

The following invention relates to suspension systems for automotive vehicles and in particular to a rear suspension system for extending the wheelbase of an automotive vehicle.

The range of automotive vehicles available on the market is ever increasing. In recent years, the automotive market, and in particular the passenger car market, has segmented faster than ever before, with the rapidly increasing popularity of, for example, city cars, MPVs and SUVs. This trend looks likely to continue as manufacturers compete in increasingly niche markets.

This trend towards market segmentation delivers an increased choice for the car consumer. However, the consumer must nonetheless arrive at a compromise when selecting which vehicle to purchase. This compromise is complex and involves many factors such as performance, efficiency, vehicle size and not least of all cost.

The reason for this compromise is that vehicles currently on the market are all of fixed design, that is to say that the vehicle is of a fixed size, with a particular drive configuration and a fixed exterior appearance (convertibles excepted). It is also conventional for wheel suspension systems to be of a fixed format, with a predetermined travel for each wheel (travel being the total stroke of each wheel from full bound to full rebound). As a result, the purchaser makes their choice of vehicle on the basis of the vehicle they believe best suited to the range activities for which the vehicle is intended. Inevitably, sometimes the choice will be severely compromised. For example, a micro city car bought for the benefits of fuel economy, manoeuvrability and cost of purchase may prove to be an excellent choice for the daily commuting to work, but will be unsuitable for those occasions when the owner needs to carry large objects, or several passengers with luggage.

Known examples of extending wheelbases include CA 2267140 discloses a trailer with wheels which swivel from one position to another. US 3931987 discloses a trailer with an axle assembly that is pivotally mounted to move between different positions. JP61155009 discloses car with wheels that can be swing forward or backward to new positions.

A conceptual solution to this problem has been proposed by Rinspeed™, a Swiss design company which designed the Presto concept car. The Presto vehicle had an extendable body so as to allow the vehicle chassis to extend from a minimised two-seater position to an extended four-seater position. This conceptual design was based on the Mercedez-Benz™ Smart™ car platform and accordingly used a rear engine, rear wheel drive design.

However, the complexity of the design and the cost of manufacture have thus far prevented the car from being commercially viable. In addition the structural rigidity of the vehicle body is compromised.

It is an aim of the present invention to at least mitigate some of the above problems.

According to an aspect of the invention there is provided a suspension assembly for an automotive vehicle, the assembly having an arm pivotable between a first position in which the arm acts as a leading arm and a second position in which the arm acts as a trailing arm so as to extend the wheelbase of the vehicle upon pivoting from the first position to the second position, characterised in that there is a provided a link arm (52), wherein a second end of the link arm (52) is pivotally attached to the suspension arm (24) at a position (54) near to the suspension arm pivot point.

This provides the advantage that the vehicle can very easily be changed between a short wheel-based version and a long wheel-based version simply by the pivoting of the rear suspension arm between its first and second positions. This arrangement is particularly advantageous since relatively few additional components need to be provided to the vehicle suspension system over and above a standard trailing arm set up.
In an embodiment, the suspension arm rotates about a fixed bracket which has a first end attached to a chassis of the vehicle.
In an embodiment, a second end of the bracket provides a pivot point for a bell crank which has a first end attached to a vehicle suspension damper.
In an embodiment, a second end of the bell crank is pivotally attached to a first end of a link arm which has its second end pivotally attached to the suspension arm.
In an embodiment, the link arm is substantially straight.
In an embodiment, the bell crank has a curved profile, optionally a right angle.

In an embodiment, the pivot point of the bell crank is arranged substantially equidistant between the damper pivot point and the link arm pivot point.

In an embodiment, the bracket, bell crank, link arm and suspension arm form a four bar linkage.

In an embodiment, an extended portion of the bell crank between the bracket pivot point and the damper pivot point forms an extension to the four bar linkage.

In an embodiment, the extension is, in use, capable of compressing the damper upon wheel bound stroke, and extending the damper upon wheel rebound stroke.

In an embodiment, the link arm goes over centre upon the suspension arm moving between the trailing arm position and the leading arm position.

In an embodiment, the damper is provided with a switch to allow free extension of the damper.

Advantageously, embodiments of the invention allow the mount point of the damper to the chassis to remain fixed when the suspension arm moves between positions.

Furthermore, the damper rest position remains substantially unchanged between the two rear suspension arm positions. This minimises the time required to move the suspension arm, and reduces the necessity to change the spring and damper rates between positions.

In an embodiment, the suspension arm is connected to a torsion bar.

In an embodiment, the rotation of the suspension arm is powered by an actuator.

In an embodiment, the actuator comprises any of: a motor, hydraulic piston or pneumatic piston.

Within the scope of this application it is envisaged that the various aspects, embodiments, examples, features and alternatives set out in the preceding paragraphs, in the claims and/or in the following description and drawings may be taken individually, or in any combination thereof.

The invention will now be described, by way of example only, with reference to the following drawings in which:
Figure 1 is a side view of a vehicle showing an embodiment of the suspension arm assembly of the current invention with the suspension arm in the trailing arm position;
Figure 2 a side view of the vehicle of Figure 1 with the suspension arm in the leading arm position;
Figure 3 is a side view of the suspension arm assembly of Figure 1 with the suspension arm in the trailing arm position;
Figure 4 is a plan view of the suspension arm of Figure 3 with the suspension arm in its trailing arm position;
Figure 5 is a side view of the suspension arm assembly of Figure 1 with the suspension arm in the trailing arm position;
Figure 6 is a side view of the suspension arm assembly of Figure 1 with the suspension arm in its intermediate position;
Figure 7 is a side view of the suspension arm assembly of Figure 1 with the suspension arm in its leading arm position;
Figure 8 is a schematic plan view of a rear of a vehicle having an alternative suspension assembly not according to the present invention with the suspension assembly in the trailing arm position; and
Figure 9 is a side view of a suspension arm assembly of the suspension assembly of Figure 8.

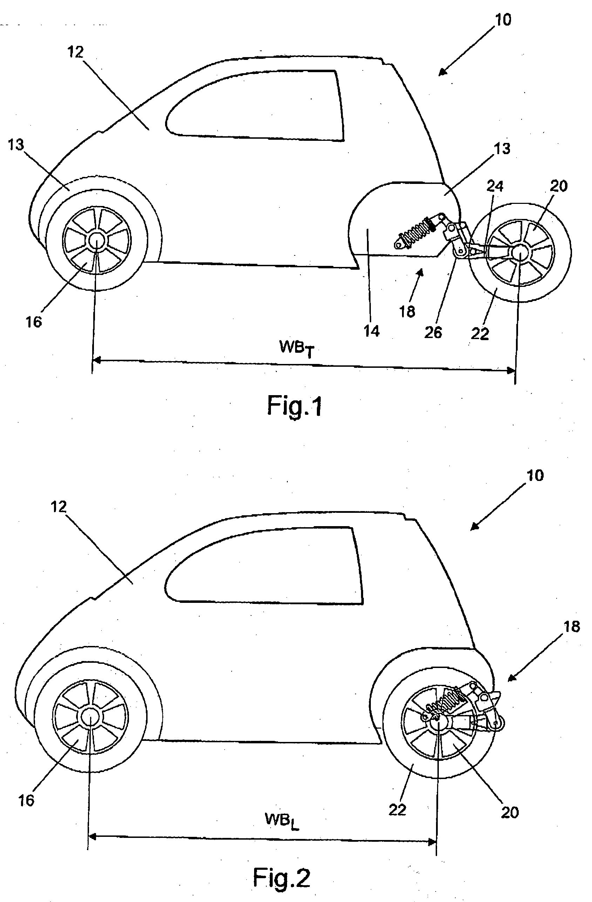

Referring to Figure 1, a vehicle 10 is shown having a body indicated generally at 12 mounted on a chassis 14 shown only in part in Figure 1 for clarity. The chassis 14 supports a front wheel suspension assembly indicated generally at 16 and a rear wheel suspension assembly indicated generally at 18 which are arranged within front and rear wheel arches 13 respectively. Attached to the rear suspension assembly 18 is a wheel 20 which in turn carries a tyre 22. The rear suspension assembly 18 includes a suspension arm 24 shown behind the wheel 20 and tyre 22. The arm 24 is pivotable about a bushing 26 to provide rear suspension for the vehicle. In Figure 1 the suspension assembly is in its trailing arm position, that is to say the suspension arm extends rearwardly from its bushing 26.

Turning now to Figure 2, the suspension assembly 18 has been moved from its trailing arm position of Figure 1 to its leading arm position, that is to say the suspension arm 24 now extends in a forward direction from its bushing 26. In all other respects the vehicle 10 has remained the same. The difference in wheelbase is shown by the arrow WB showing the distance between the front and rear wheel centres. WB_{T} is the wheelbase delivered with the wheelbase in the trailing arm configuration and WB_{L} is the wheelbase delivered with the suspension in the leading arm configuration.

In moving from the trailing arm configuration of Figure 1 to the leading arm configuration of Figure 2, the wheelbase of the vehicle 10 has been considerably reduced. Whilst not shown for clarity in the Figures, the extended wheelbase configuration could allow the vehicle 10 to carry an extra load-carrying module of even an additional set of seats. However, when such additional capacity was not required, the vehicle 10 could be easily returned to its short wheelbase configuration.

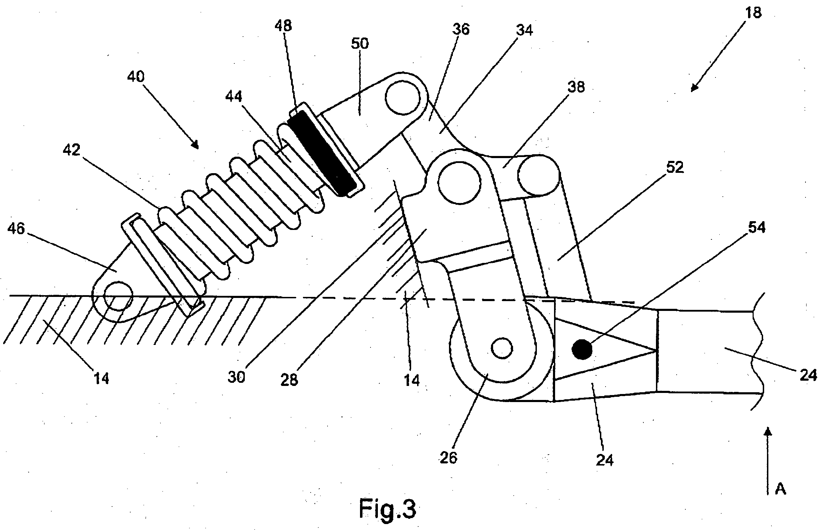

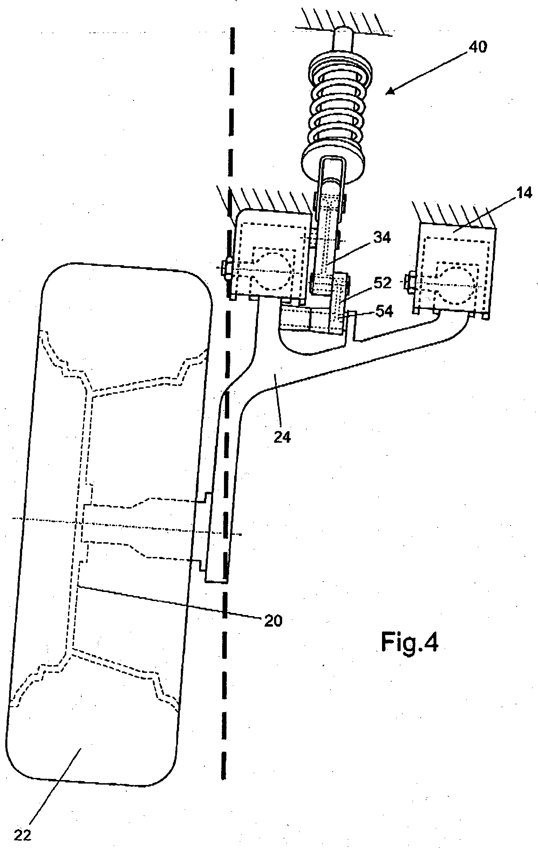

Turning now to Figures 3 and 4, the suspension assembly is shown in greater detail having a mount bracket 28 which has a mount face 30 for mounting to the chassis 14, shown schematically only in Figure 3 for clarity. The opposite end of the mount bracket 28 carries the bushing 26 which in turn supports a bearing such as a ball joint 32 (not shown for clarity) arranged on the end of the suspension arm 24. Accordingly the mount bracket 28 is fixed relative to the chassis 14 and the suspension arm 24 is rotatable about the mount bracket 28 by way of the bushing 26 and ball joint 32.

Also attached to the chassis 14 is a coil over damper assembly 40. The assembly 40 has a coil spring 42 and a damper 44 and is pivoted for rotation to the chassis 14 by a damper bracket 46. The assembly also has a switchable spring lock 48, the purpose of which will be described in further detail shortly. Arranged at the opposite end of the assembly 40 to the damper bracket is a bell crank mount 50.

A bell crank 34 connects the damper assembly 40 to the mount bracket 28 and is pivoted for rotation on the mount bracket 28, at the opposite end of the mount bracket 28 to the suspension arm 24. The bell crank 34 is broadly u-shaped and pivoted on the mount bracket 28 at approximately its mid-point. It defines a first arm 36 and a second arm 38 which are angled at approximately 120 degrees to one another. The first arm 36 connects the damper assembly 40 to the mount bracket 28 and the second arm 38 is connected to a link arm 52.

The purpose of the link arm 52 is to transmit movement of the suspension arm 24 to the damper assembly 40 via the bell crank 34. Accordingly one end of the link arm 52 is attached to the suspension arm 24 at pivot 54 (shown in hidden detail in Figure 3) and the other end is attached to the second arm 38 of the bell crank 34.

In use suspension arm bound and rebound is provided as follows. Upon the vehicle 10 hitting a bump in the road surface, a load is transmitted via the tyre 22 and the wheel 20 into the suspension arm 24 in direction A as shown in Figure 3. This causes the arm 24 to rotate in an anti-clockwise direction about the bushing 26. This in turn raises the link arm 52 causing the bell crank 34 to rotate in an anticlockwise direction with respect to the stationary mount bracket 28. This in turn causes the bell crank 34 to compress the damper assembly 40 thereby isolating the effects of the imperfections of the road surface from the vehicle chassis 14. In rebound the sprung weight of the suspension assembly returns the suspension arm 24 to its original position under the damping of the damper assembly 40. It will be appreciated that in this configuration the coil spring 42 and damper 44 operate in compression during wheel bound and in extension in wheel rebound.

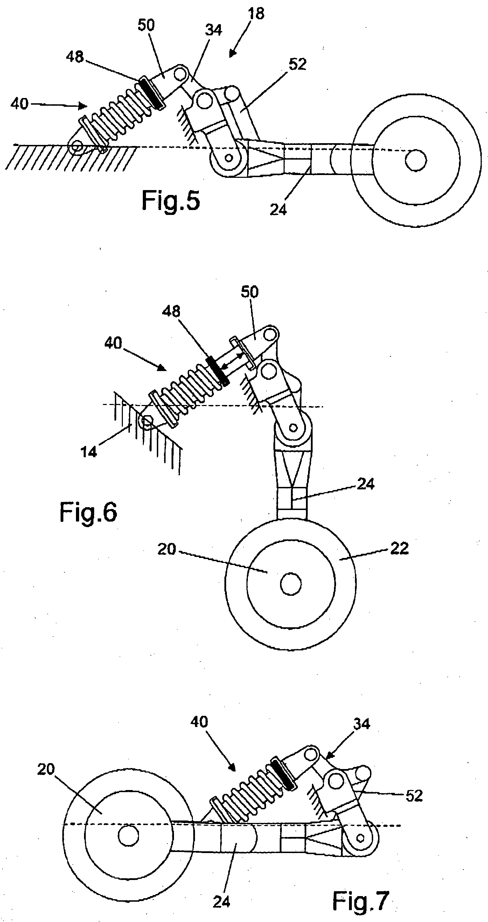

Turning now to Figure 5, the suspension assembly 18 is once again shown in the trailing arm position shortly before being rotated to the leading arm position. As mentioned above, in the trailing arm position, the damper assembly 40 is under compression under wheel bound. Accordingly the switchable spring lock 48 can be switched off, disengaging the spring from the damper assembly, allowing the suspension arm to rotate without forcing the spring to over-extend.

To move from the trailing arm position to the leading arm position, the suspension arm 24 is rotated in a clockwise direction from the Figure 5 position. This rotation may be achieved in a variety of ways without departure from the invention. For example an in-wheel motor might be provided to generate the motive force to rotate the arm. Alternatively the arm 24 could be driven to rotate about the bushing by way of an actuator. This actuator may take the form of a motor and gearbox assembly or a hydraulically or pneumatically actuated piston mounted on the vehicle chassis 14.

The clockwise rotation of the suspension arm 24 causes the link arm 52 to lower which in turn causes the bell crank 34 to rotate in a clockwise direction which extends the damper assembly 40. However, since the switchable spring lock 48 has been deactivated the bell crank mount 50 is able to extend without extending the spring 42 or damper 44. This allows the suspension arm to continue to rotate to its intermediate position as shown in Figure 6 without placing undue strain on the damper assembly 40.

As the suspension arm 24 continues to rotate past the intermediate position of Figure 6, so the switchable spring lock 48 re-engages the bell crank mount 50 and is locked back in position. In this way the switchable spring lock 48 allows the damper assembly 40 to reach its maximum required extension, without the requirement for the spring 42 and damper to achieve the same extremes of extension.

Referring now to Figure 7, the suspension assembly has rotated to its leading arm position and it can be seen that the link arm 52 is now also in a forward-facing orientation in distinction from its rearward orientation when the suspension arm 24 was in its trailing arm position. As a result the configuration of the damper assembly 40 is largely the same as it was with the assembly 18 in the trailing arm position. This provides benefits in terms of sharing spring and damper rates across the two configurations. Importantly, in this configuration, as with the trailing arm configuration, the coil spring 42 and damper 44 operate in compression during wheel bound and in extension in wheel rebound.

The embodiment described above is for a coil over damper suspension based system. The invention also provides for a torsion bar suspension configuration as follows.

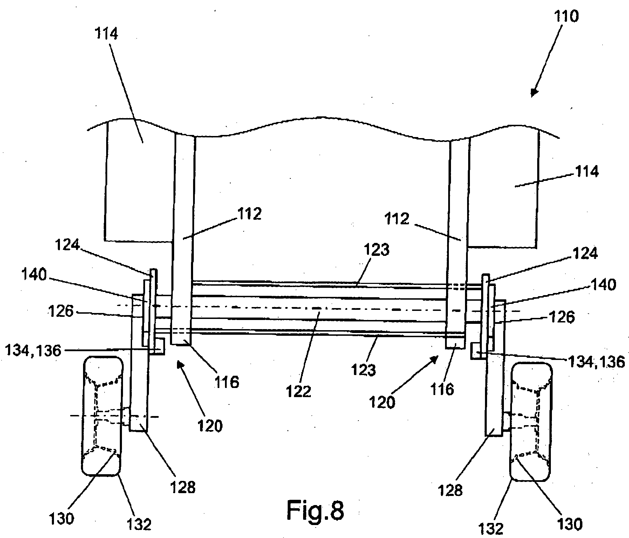

Turning to Figure 8, the rear part of a vehicle 110 is shown having a vehicle chassis 112 supporting a body 114. The chassis includes two chassis rails 116 which support a rear suspension assembly indicated generally at 120. The suspension assembly 120 has a central beam 122 which is fixed relative to the chassis rails 116 and carries near to its respective ends a mount bracket 124. Outboard of the mount bracket 124 is a suspension arm bracket 126 which is mounted on the ends of the beam 122 on bearings (not shown for clarity) so that is free to rotate relative to the mount bracket 124. The suspension arm bracket 126 carries a suspension arm 128 on which is mounted a wheel 130 and tyre 132. Torsion beams 123 are provided to give compliance to the displacement of the suspension arms 128 relative to the chassis rails in a known manner.

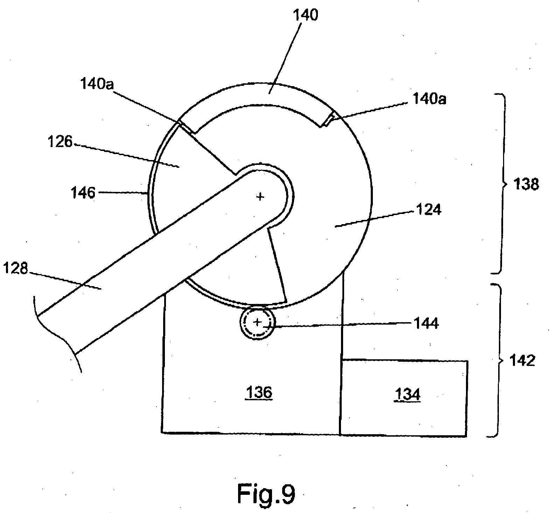

Referring now to Figure 9, the mount bracket 124 and suspension arm bracket 126 are shown in greater detail. The mount bracket 124 has an upper portion 138 which defines a limit stopper 140 for the suspension arm bracket 126 and lower portion 142 which has an actuator in the form of a motor 134 and gearbox 136 mounted to it. The output from the gearbox 136 is drive gear 144 which engages a toothed section 146 on the perimeter of the suspension arm bracket 126. The toothed section 146 abuts the limit stopper 140 when the suspension arm 128 is in either the trailing or the leading arm position as will be described in further detail shortly.

In use the motor 134 drives the suspension arm bracket 126 via the drive gear 144 and toothed section 146 to move the suspension arm 128 from the trailing arm position (as shown in Figures 8 and 9) to the leading arm position and vice versa. With the suspension arm bracket 126 engaging the limit stopper 140 of the mount bracket 124, bound stroke of the suspension arm 128 is transferred through the limit stopper 140 to the mount bracket 124 and then reacted by the torsion bars 123. In contrast, in rebound the load is carried through the drive gear 144, gearbox 136 and motor 134 to the mount bracket 124.

## Claims

1. A structure for a vehicle, the structure comprising a suspension arm (24) pivotable between a first position in which the arm acts as a leading arm and a second position in which the arm acts as a trailing arm so as to alter the wheelbase (WB) of the vehicle upon pivoting between the first and second positions, wherein the suspension travel when the arm (24) is in the first position is substantially equal to the suspension travel when the arm (24) is in the second position,
**characterised in that**:
there is a provided a link arm (52), wherein a second end of the link arm (52) is pivotally attached to the suspension arm (24) at a position (54) near to the suspension arm pivot point.

2. A structure according to claim 1, wherein the suspension arm (24) is arranged to rotate about a fixed bracket (28) which is attached to a rigid mounting point and has a first pivot point for the suspension arm (24) and a second pivot point for a bell crank (34).

3. A structure according to claim 2, wherein the bell crank (34) has a first end (36) forming a pivot point for a suspension damper (40) and a second end (38) forming a pivot point for a first end of the link arm (52).

4. A structure according to claim 3, wherein the pivot point of the bell crank (34) on the fixed bracket (28) is arranged substantially equidistant between the damper pivot point and the link arm pivot point.

5. A structure according to claim 4, wherein the fixed bracket (28), bell crank (34), link arm (52) and suspension arm (24) form a four bar linkage.

6. A structure according to any one of claims 3 to 5, wherein the damper (40) is provided with a switch (48) to allow free extension of the damper.

7. A structure according to any preceding claim, wherein rotation of the suspension arm (24) is powered by an actuator.

8. A structure according to claim 7, wherein the actuator comprises any of: a motor (134), a hydraulic piston or a pneumatic piston.

9. A structure according to any preceding claim, wherein the suspension arm (128) is connected to a torsion bar (123).

10. A structure according to any one of claims 1 to 8, wherein the suspension arm (24) is connected to a coil spring (42).

11. A vehicle comprising a structure according to any preceding claim, wherein the vehicle may be used with the suspension arm (24, 128) in the first position or in the second position.

12. A vehicle according to claim 11, wherein the vehicle can be operated at substantially all speeds within the performance envelope of the vehicle when the suspension arm (24, 128) is in the first position or in the second position.

13. A vehicle comprising a structure according to any one of claims 1 to 10, wherein the spring and damper rates are substantially equal in the first and second suspension arm positions.

14. A vehicle according to any one of claims 11 to 13, wherein the vehicle can carry an extra load-carrying module or an additional row of seats when the suspension arm (24, 128) is in the second position.

## Patentansprüche

1. Struktur für ein Fahrzeug, wobei die Struktur einen Aufhängungsarm (24) umfasst, der zwischen einer ersten Position, in der der Arm als ein Führungsarm wirkt, und einer zweiten Position, in der der Arm als ein Längslenkarm wirkt, drehbar ist, um den Radstand (WB) des Fahrzeugs nach dem Drehen zwischen der ersten und der zweiten Position zu ändern, wobei der Aufhängungsweg, wenn sich der Arm (24) in der ersten Position befindet, im Wesentlichen dem Aufhängungsweg entspricht, wenn sich der Arm (24) in der zweiten Position befindet,
**dadurch gekennzeichnet, dass**:
ein Verbindungsarm (52) bereitgestellt ist, wobei ein zweites Ende des Verbindungsarms (52) drehbar an dem Aufhängungsarm (24) in einer Position (54) nahe des Aufhängungsarm-Drehpunktes angebracht ist.

2. Struktur nach Anspruch 1, wobei der Aufhängungsarm (24) angeordnet ist, sich um einen fixierten Träger (28) zu drehen, der an einem starren Befestigungspunkt angebracht ist und einen ersten Drehpunkt für den Aufhängungsarm (24) und einen zweiten Drehpunkt für einen Winkelhebel (34) aufweist.

3. Struktur nach Anspruch 2, wobei der Winkelhebel (34) ein erstes Ende (36), das einen Drehpunkt für einen Aufhängungsdämpfer (40) bildet, und ein zweites Ende (38), das einen Drehpunkt für ein erstes Ende des Verbindungsarms (52) bildet, aufweist.

4. Struktur nach Anspruch 3, wobei der Drehpunkt des Winkelhebels (34) auf dem fixierten Träger (28) im Wesentlichen in gleichem Abstand zwischen dem Dämpfer-Drehpunkt und dem Verbindungsarm-Drehpunkt angeordnet ist.

5. Struktur nach Anspruch 4, wobei der fixierte Träger (28), der Winkelhebel (34), der Verbindungsarm (52) und der Aufhängungsarm (24) ein Viergelenkgetriebe bilden.

6. Struktur nach einem der Ansprüche 3 bis 5, wobei der Dämpfer (40) mit einem Schalter (48) ausgestattet ist, um eine freie Erweiterung des Dämpfers zu ermöglichen.

7. Struktur nach einem der vorhergehenden Ansprüche, wobei das Drehen des Aufhängungsarms (24) von einem Aktuator angetrieben ist.

8. Struktur nach Anspruch 7, wobei der Aktuator eines der Folgenden umfasst: einen Motor (134), einen Hydraulikkolben oder einen pneumatischen Kolben.

9. Struktur nach einem der vorhergehenden Ansprüche, wobei der Aufhängungsarm (128) mit einem Drehstab (123) verbunden ist.

10. Struktur nach einem der Ansprüche 1 bis 8, wobei der Aufhängungsarm (24) mit einer Schraubenfeder (42) verbunden ist.

11. Fahrzeug, umfassend eine Struktur nach einem der vorhergehenden Ansprüche, wobei das Fahrzeug mit dem Aufhängungsarm (24, 128) in der ersten Position oder in der zweiten Position verwendet werden kann.

12. Fahrzeug nach Anspruch 11, wobei das Fahrzeug bei im Wesentlichen allen Geschwindigkeiten in der Leistungsbereichsgrenze des Fahrzeugs betrieben werden kann, wenn der Aufhängungsarm (24, 128) sich in der ersten oder in der zweiten Position befindet.

13. Fahrzeug, umfassend eine Struktur nach einem der Ansprüche 1 bis 10, wobei die Feder- und die Dämpferkonstante in der ersten und in der zweiten Aufhängungsarmposition im Wesentlichen übereinstimmen.

14. Fahrzeug nach einem der Ansprüche 11 bis 13, wobei das Fahrzeug eine zusätzliche Lastaufnahmeeinrichtung oder eine zusätzliche Sitzreihe tragen kann, wenn sich der Aufhängungsarm (24, 128) in der zweiten Position befindet.

## Revendications

1. Structure pour un véhicule, la structure comprenant un bras de suspension (24) pivotable entre une première position dans laquelle le bras agit comme bras d'attaque et une seconde position dans laquelle le bras agit comme bras de fuite, de sorte à modifier l'empattement (WB) du véhicule lors du pivotement entre les première et seconde positions, dans laquelle le débattement de la suspension lorsque le bras (24) est dans la première position est sensiblement égal au débattement de la suspension lorsque le bras (24) est dans la seconde position,
**caractérisée en ce que** :
un bras de liaison (52) est prévu, dans laquelle une seconde extrémité du bras de liaison (52) est fixée avec faculté de pivotement au bras de suspension (24) en une position (54) à proximité du point de pivot du bras de suspension.

2. Structure selon la revendication 1, dans laquelle le bras de suspension (24) est agencé pour tourner autour d'une console fixe (28) qui est fixée à un point de montage rigide et a un premier point de pivot pour le bras de suspension (24) et un second point de pivot pour un levier coudé (34).

3. Structure selon la revendication 2, dans laquelle le levier coudé (34) a une première extrémité (36) formant un point de pivot pour un amortisseur de suspension (40) et une seconde extrémité (38) formant un point de pivot pour une première extrémité du bras de liaison (52).

4. Structure selon la revendication 3, dans laquelle le point de pivot du levier coudé (34) sur la console fixe (28) est agencé sensiblement à équidistance entre le point de pivot d'amortisseur et le point de pivot de bras de liaison.

5. Structure selon la revendication 4, dans laquelle la console fixe (28), le levier coudé (34), le bras de liaison (52) et le bras de suspension (24) forment un quadrilatère articulé.

6. Structure selon l'une quelconque des revendications 3 à 5, dans laquelle l'amortisseur (40) est doté d'un commutateur (48) pour permettre une extension libre de l'amortisseur.

7. Structure selon l'une quelconque des revendications précédentes, dans laquelle la rotation du bras de suspension (24) est alimentée par un actionneur.

8. Structure selon la revendication 7, dans laquelle l'actionneur comprend l'un quelconque : d'un moteur (134), d'un piston hydraulique ou d'un piston pneumatique.

9. Structure selon l'une quelconque des revendications précédentes, dans laquelle le bras de suspension (128) est raccordé à une barre de torsion (123).

10. Structure selon l'une quelconque des revendications 1 à 8, dans laquelle le bras de suspension (24) est raccordé à un ressort hélicoïdal (42).

11. Véhicule comprenant une structure selon l'une quelconque des revendications précédentes, dans lequel le véhicule peut être utilisé avec le bras de suspension (24, 128) dans la première position ou dans la seconde position.

12. Véhicule selon la revendication 11, dans lequel le véhicule peut fonctionner à sensiblement toutes les vitesses à l'intérieur de l'enveloppe de performance du véhicule lorsque le bras de suspension (24, 128) est dans la première position ou dans la seconde position.

13. Véhicule comprenant une structure selon l'une quelconque des revendications 1 à 10, dans lequel la constante de rappel de ressort et la constante d'amortisseur sont sensiblement égales dans les première et seconde positions de bras de suspension.

14. Véhicule selon l'une quelconque des revendications 11 à 13, dans lequel le véhicule peut porter un module portant une charge supplémentaire ou une rangée additionnelle de sièges lorsque le bras de suspension (24, 128) est dans la seconde position.
